# EUROPÄISCHE PATENTSCHRIFT

(11) **EP 3 101 179 B1**
(45) Veröffentlichungstag und Bekanntmachung des Hinweises auf die Patenterteilung: **18.04.2018**
(21) Anmeldenummer: 15170567.0
(22) Anmeldetag: 03.06.2015
(51) Int. Cl.: E02D 7/18, F16H 39/02, F16H 61/44, F16H 39/00, F16H 61/444, B06B 1/00

(54) **ARBEITSGERÄT, INSBESONDERE FÜR EINE BAUMASCHINE**
WORKING MACHINE, ESPECIALLY FOR A CONSTRUCTION MACHINE
APPAREIL DE TRAVAIL, NOTAMMENT POUR UN ENGIN DE CHANTIER

(43) Veröffentlichungstag der Anmeldung: 07.12.2016
(73) Patentinhaber: ABI Anlagentechnik-Baumaschinen-Industriebedarf Maschinenfabrik und Vertriebsgesellschaft mbH, 63843 Niedernberg (DE)
(72) Erfinder: Heichel, Christian, 63843 Niedernberg (DE); Kleibl, Dr., Albrecht, 63762 Großostheim (DE)
(74) Vertreter: Patentanwälte Dörner & Kötter PartG mbB

(56) Entgegenhaltungen:
- EP-A- 2 007 009
- EP-A1- 2 557 233
- WO-A1-2005/056201
- DE-A1-102013 103 722

## Beschreibung

Die Erfindung betrifft ein Arbeitsgerät, für eine Baumaschine umfassend wenigstens einen hydraulischen Konstantmotor, der in einen Hydraulikkreislauf angeordnet ist, der von einem Primärvolumenstrom einer Basispumpe gespeist ist und über diesen antreibbar ist.

Im Bauwesen kommen unterschiedliche hydraulisch betriebene Arbeitsgeräte wie Vibrationsrammgeräte, Bodenverdichter oder Bohr- und Mischgeräte zum Einsatz. Ein Rammvibrator ist bspw. in der gattungsbildenden WO 2005/056201 A1 beschrieben.

Solche Arbeitsgeräte werden über Hydraulikmotoren angetrieben, deren Leistungskurve abhängig ist von Betriebsdrehzahl und Betriebsdruck. Wird der optimale Betriebsdrehzahlbereich des Hydraulikmotors verlassen, so resultiert hieraus ein Leistungsabfall. Bei Hydraulikmotoren mit konstantem Schluckvolumen liegt bei geringer Belastung ein unnötig großer Volumenstrom an, wodurch hohe Verlustleistungen resultieren. Die Drehzahl des Hydraulikmotors ist durch den maximalen Volumenstrom begrenzt. Das maximale Drehmoment ergibt sich aus Pumpendruck und konstantem Schluckvolumen.

Vor diesem Hintergrund wird in der EP 2 085 149 B1 vorgeschlagen, einen hydraulischen Antrieb mit verstellbarem Schluckvolumen einzusetzen, bei dem das Schluckvolumen entsprechend den jeweils aktuellen Verhältnissen angepasst werden kann, wodurch eine Anpassung der Leistungskurve auf den jeweils erforderlichen Drehzahlbereich ermöglicht ist. Einem Leistungsabfall des Antriebs ist hierdurch entgegengewirkt. Eine hydraulische Antriebseinheit für ein Raupenfahrzeug ist in der EP 1 260 401 A2 beschrieben.

Besonders bei Bohr- und Mischantrieben kommen häufig Radialkolbenmotoren zum Einsatz. Diese verfügen über ein sehr großes Drehmoment, weshalb das Getriebe deutlich einfacher ausgeführt ist oder sogar ganz entfallen kann. Außerdem ermöglicht der ringförmige Aufbau dieser Motoren die zentrische Durchführung von Rohren und Bohrwerkzeugen. Derartige Radialkolbenmotoren sind jedoch, wie beispielsweise auch Orbit- oder Zahnradmotoren, nicht als Verstellmotoren verfügbar.

Hier setzt die vorliegende Erfindung an. Der Erfindung liegt die Aufgabe zugrunde, ein Arbeitsgerät für eine Baumaschine, mit einem hydraulischen Konstantmotor zu schaffen, das eine Anpassung der Leistungskurve auf den jeweiligen Drehzahlbereich ermöglicht. Gemäß der Erfindung wird diese Aufgabe durch die Merkmale des kennzeichnenden Teils des Patentanspruchs 1 gelöst.

Mit der Erfindung ist ein Arbeitsgerät für eine Baumaschine, mit einem hydraulischen Konstantmotor geschaffen, das eine Anpassung der Leistungskurve auf den jeweiligen Drehzahlbereich ermöglicht. Durch die Anordnung wenigstens einer hydraulisch parallel zu dem wenigstens einen Konstantmotor geschalteten rotierenden hydraulischen Maschine, die entweder mit dem Konstantmotor oder mit einer zweiten hydraulischen Maschine gekoppelt ist, welche zweite Maschine von dem Primärvolumenstrom, die erste Maschine von einen Sekundärvolumenstrom und der Konstantmotor von einem Summenvolumenstrom aus Primär- und Sekundärvolumenstrom gespeist ist, ist eine Wandlung des Volumenstroms des Konstantmotors relativ zum Primärvolumenstrom ermöglicht.

Der Konstantmotor ist an den Primärvolumenstrom angeschlossen, wobei durch eine zusätzliche rotierenden Maschine, bei der es sich um einen Motor, eine Pumpe oder eine wahlweise als Hydraulikpumpe oder Hydraulikmotor betreibare Maschine handeln kann, dieser Primärvolumenstrom vergrößerbar bzw. reduzierbar ist. Dem Energieerhaltungssatz entsprechend ist dadurch die an dem Konstantmotor wirkende Druckdifferenz änderbar. Durch eine Vergrößerung des Differenzdrucks an dem Konstantmotor ist eine Steigerung des Drehmoments ermöglicht, durch eine Vergrößerung des Volumenstroms eine Steigerung der Drehzahl. Die zusätzliche rotierenden Maschine kann vom Konstantmotor mit angetrieben werden. Dabei kann wenigstens eine erste Maschine mit mehreren zweiten Maschinen gekoppelt sein. Vorteilhaft ist die Kopplung zwischen der ersten Maschine und dem Konstantmotor bzw. zwischen der ersten Maschine und einer zweiten Maschine mechanisch oder elektrisch ausgebildet. Dabei ist bevorzugt wenigstens eine der rotierenden hydraulischen Maschinen eine Axialkolbenmaschine.

In Weiterbildung der Erfindung weist wenigstens eine gekoppelte hydraulische Maschine ein verstellbares Schluckvolumen auf, welches bevorzugt soweit verstellbar ist, dass bei gleicher Drehrichtung die Förderrichtung der Maschine umkehrbar ist. Hierdurch ist eine gute Steuerbarkeit des effektiven Differenzialdrucks des Konstantmotors erzielt, wodurch eine Anpassung des Volumenstroms des Konstantmotors entsprechend den jeweils aktuellen Verhältnissen ermöglicht ist. Der Konstantmotor ist so quasi wie ein Verstellmotor betreibbar.

Die Erfindung betrifft weiterhin eine Baumaschine, umfassend ein solches Arbeitsgerät, wobei die Baumaschine insbesondere ein Bohr- oder Rammgerät sein kann.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung des Hydraulikkreislaufs eines Arbeitsgerätes einer Baumaschine;
- Figur 2: die schematische Darstellung des Hydraulikkreislaufs aus Figur 1 in einer weiteren Ausführungsform mit Verstellpumpe;
- Figur 3: die schematische Darstellung des Hydraulikkreislaufs aus Figur 2 mit als Motor betriebener Verstellpumpe;
- Figur 4: die schematische Darstellung des Differenzialdruckübersetzers des Hydraulikkreislaufs aus Figur 1;
- Figur 5: die schematische Detaildarstellung eines Hydraulikkreislaufs eines Arbeitsgerätes in einer weiteren Ausführungsform;
- Figur 6: die schematische Darstellung des Hydraulikkreislaufs eines Mischantriebes mit drei Konstantmotoren;
- Figur 7: die schematische Darstellung des Hydraulikkreislaufs eines Arbeitsgerätes mit einem Hydraulikzylinder und
- Figur 8: die schematische Darstellung einer Baumaschine mit angeordnetem Bohrgerät.

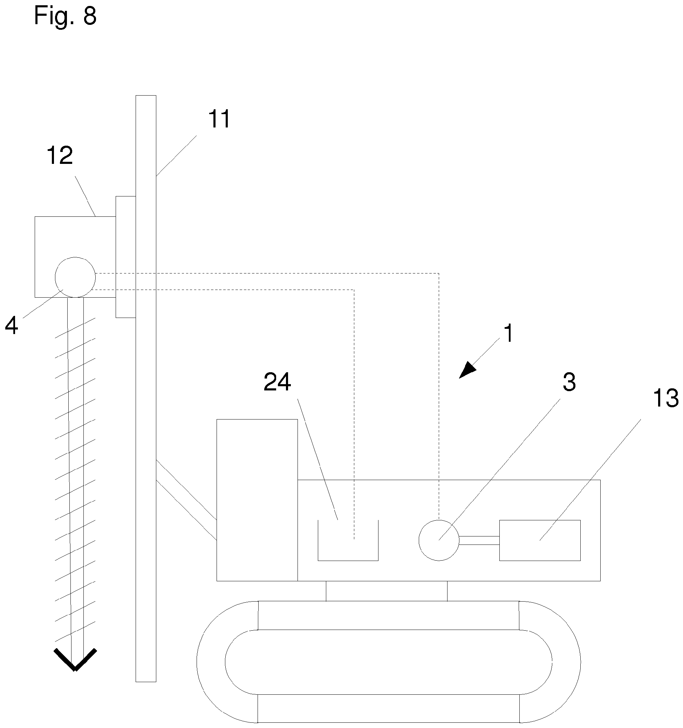

Das als Ausführungsbeispiel gewählte Arbeitsgerät ist in Form eines Bohrgerätes 12 ausgebildet, das in Figur 8 an einem Mäkler 11 einer Baumaschine 1 geführt dargestellt ist. In dieser Figur 8 sind die Komponenten des Hydraulikkreislaufs lediglich schematisch skizziert, wobei Fluidverbindungen als gestrichelte Linien dargestellt sind. Üblicherweise ist eine solche Baumaschine auch mit zwei oder drei nebeneinander angeordneten Bohrgeräten ausgestattet.

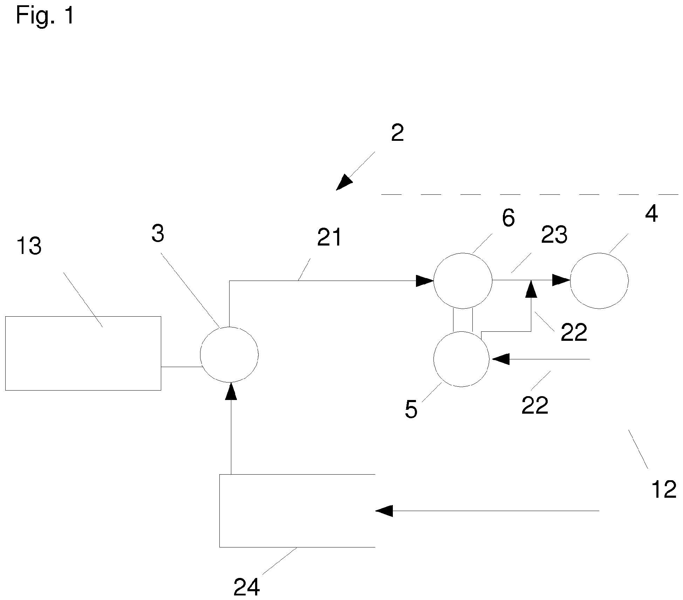

In Figur 1 ist der Hydraulikkreislaufs 2 des Bohrgerätes 12 schematisch dargestellt. Der Hydraulikkreislauf 2 umfasst eine Basispumpe 3, die über den Dieselmotor 13 der Baumaschine 1 antreibbar ist und die mit einem Hydrauliktank 24 verbunden ist. Die Basispumpe 3 generiert einen Primärvolumenstrom 21, über den eine als Hydraulikmotor ausgestaltete zweite hydraulische Maschine 6 gespeist ist, die über eine mechanische Kopplung 61 eine als hydraulische Verstellpumpe ausgebildete erste hydraulische Maschine 5 antreibt. Der zweiten hydraulischen Maschine 6 nachgeschaltet ist der als Radialkolbenmotor ausgebildete Konstantmotor 4 des Bohrgerätes 12 angeordnet.

Die erste hydraulische Maschine 5 ist hydraulisch parallel zu dem Konstantmotor 4 geschaltet, wodurch ein Sekundärvolumenstrom 22 hinter dem Konstantmotor 4 aus dem Hydraulikkreislauf 2 abgezweigt und dem Konstantmotor 4 vorgeschaltet dem Primärvolumenstrom 21 zugeführt wird. Der Konstantmotor 4 wird so von einem Summenvolumenstrom 23 gespeist, der aus dem Primärvolumenstrom 21 und dem Sekundärvolumenstrom 22 zusammengesetzt ist. Hierdurch ist eine Drehzahlerhöhung des Konstantmotors erzielt.

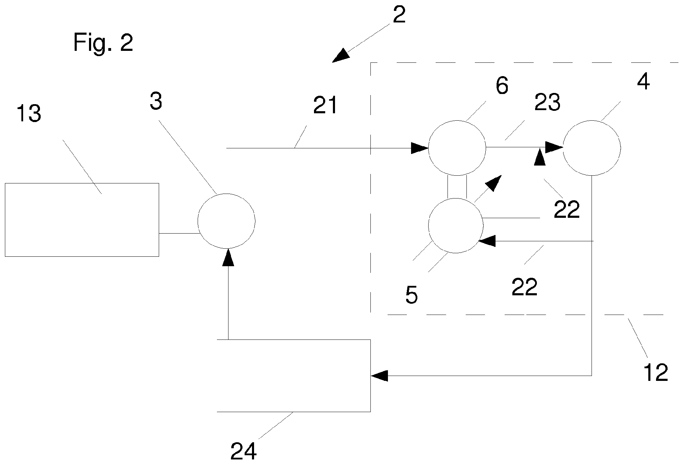

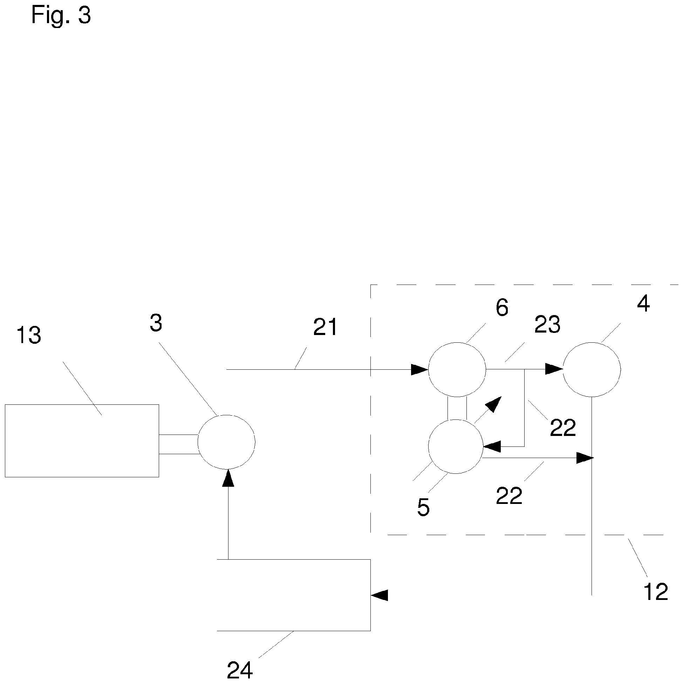

Im Ausführungsbeispiel gemäß Figur 2 weist die erste hydraulische Maschine 5 ein verstellbares Schluckvolumen auf und ermöglicht so einen bedarfsgerechten Volumenstrom. Bei Umkehrung der Förderrichtung der ersten hydraulischen Maschine 5 durch Verstellung des Schluckvolumens derart, dass ihre Förderrichtung umgekehrt ist, wird der Sekundärvolumenstrom 22 dem Konstantmotor 4 vorgeschaltet aus dem Primärvolumenstrom 21 abgezweigt und dem Hydraulikkreislauf 2 dem Konstantmotor 4 nachgeschaltet wieder zugeführt (vgl. Figur 3). In dieser Betriebsstellung der ersten hydraulischen Maschine 5 ist der Summenvolumenstrom 23, der den Konstantmotor 4 speist, geringer als der Primärvolumenstrom 21. Die erste hydraulische Maschine 5 und die zweite hydraulische Maschine 6 wirken in dieser Konfiguration als "Differenzialdruckübersetzer" für den Konstantmotor 4 und ermöglichen so eine Erhöhung des Drehmoments des Konstantmotors 4.

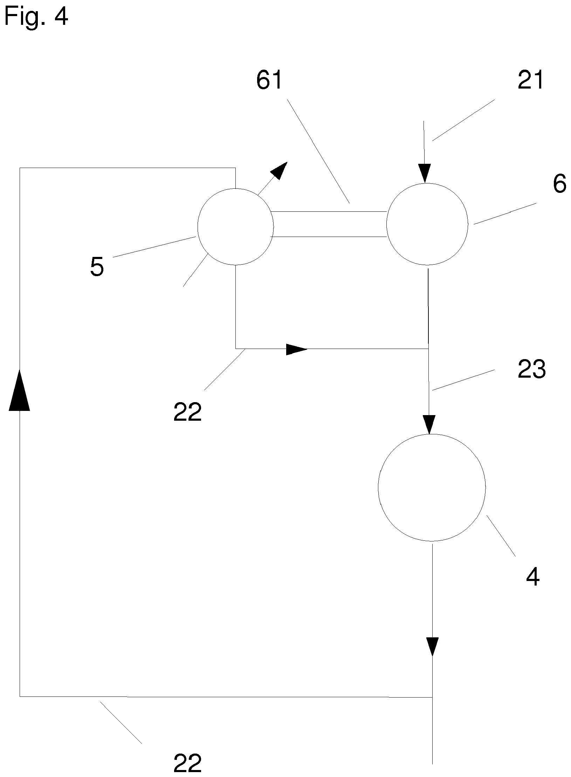

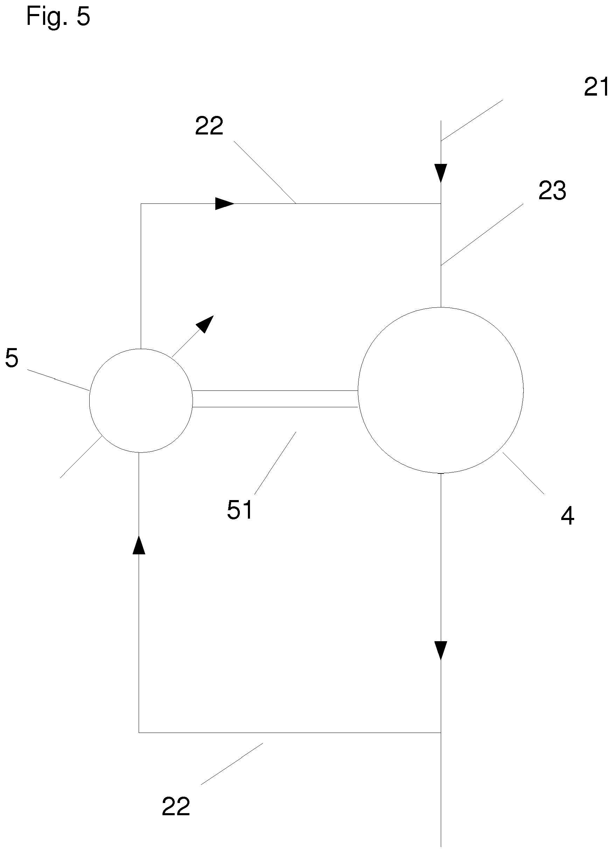

In Figur 4 ist der dem Konstantmotor 4 vorgestaltete, aus der ersten hydraulischen Maschine 5 und der zweiten hydraulische Maschine 6 gebildete "Differenzialdruckübersetzer" (Koppelgruppe) aus Figur 2 zur Verdeutlichung nochmals dargestellt. Eine Differenzialdruckübersetzung der vorstehenden Art ist auch durch Anordnung nur einer ersten hydraulischen Maschine 5 erzielbar, wie schematisch in Figur 5 dargestellt. Auch hier ist die erste hydraulische Maschine 5 als hydraulische Verstellpumpe ausgebildet, welche vorliegend über eine mechanische Kupplung 51 von dem Konstantmotor 4 angetrieben wird.

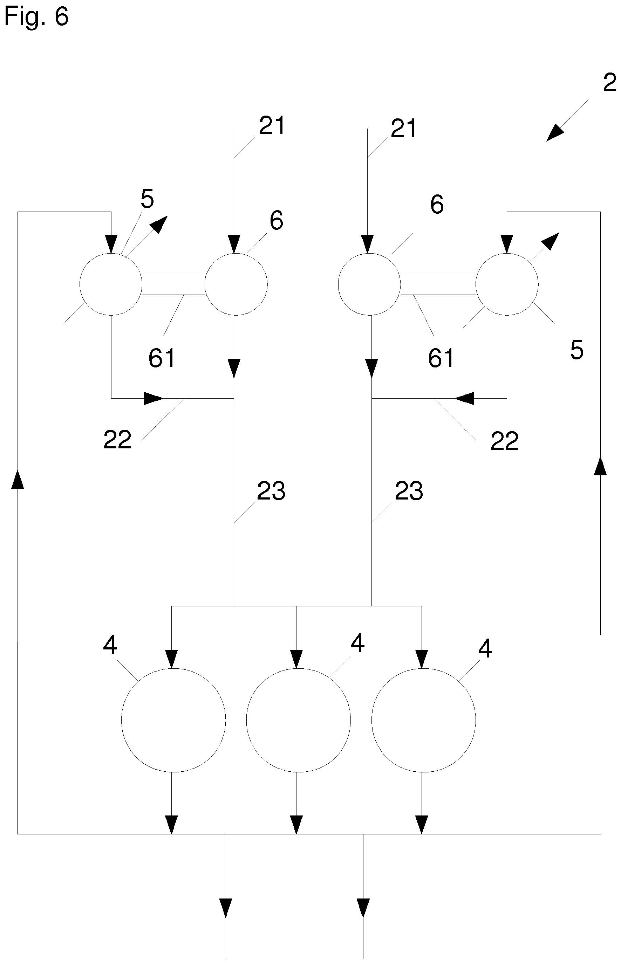

Im Ausführungsbeispiel gemäß Figur 6 sind drei Konstantmotoren 4 einer Mischeinrichtung angeordnet. In Figur 6 ist lediglich der wesentliche Teil des Hydraulikkreislaufs 2 dieser Mischeinrichtung dargestellt. Die drei Konstantmotoren 4 sind in dem Hydraulikkreislauf 2 parallel zueinander verschaltet und durch zwei Summenvolumenströme 23 gespeist, welche jeweils durch eine als Differenzialdruckübersetzer wirkende Koppelgruppe, gebildet aus einer ersten hydraulischen Maschine 5 und einer zweiten hydraulischen Maschine 6, hervorgehen.

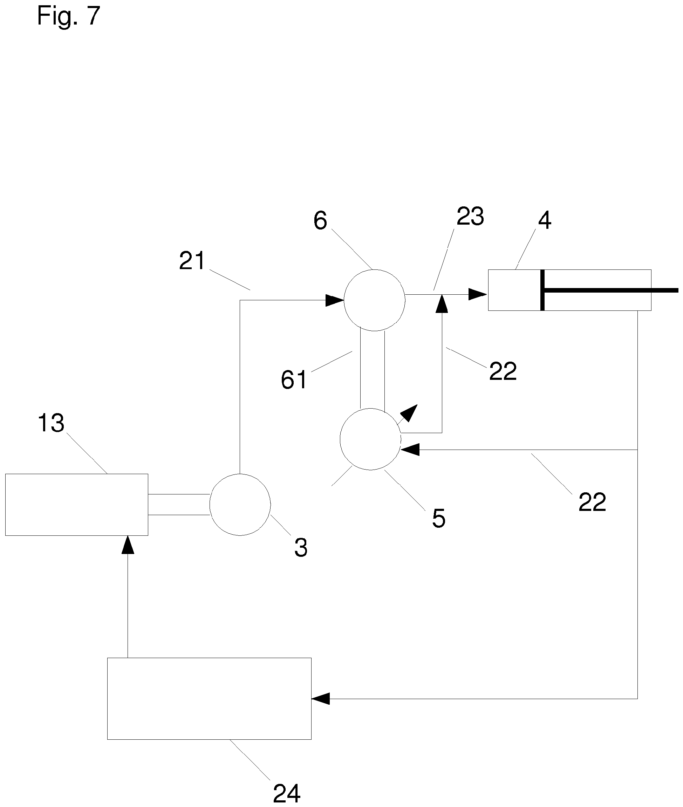

Im Ausführungsbeispiel gemäß Figur 7 ist anstelle eines Radialkolbenmotors der Konstantmotor 4 als Hydraulikzylinder ausgebildet. Auch hier wird der Konstantmotor 4 entsprechend dem Ausführungsbeispiel gemäß Figur 1 durch einen Summenvolumenstrom 23 gespeist, der aus dem Primärvolumenstrom 21 und dem durch die erste hydraulische Maschine 5 dem Konstantmotor 4 nachgeschaltet abgezweigten Sekundärvolumenstrom 22 zusammengesetzt ist.

## Patentansprüche

1. Arbeitsgerät für eine Baumaschine, umfassend wenigstens einen hydraulischen Konstantmotor (4), der in einen Hydraulikkreislauf (2) angeordnet ist, der von einem Primärvolumenstrom (21) einer Basispumpe (3) gespeist ist und über diesen antreibbar ist, **dadurch gekennzeichnet, dass** wenigstens eine rotierende hydraulische erste Maschine (5) angeordnet ist, die hydraulisch parallel zu dem wenigstens einen Konstantmotor (4) geschaltet ist, wodurch ein Sekundärvolumenstrom (22) hinter dem Konstantmotor (4) aus dem Hydraulikkreislauf (2) abgezweigt und dem Konstantmotor (4) vorgeschaltet dem Primärvolumenstrom (21) zugeführt wird, welche erste Maschine (5) entweder mit dem Konstantmotor (4) des Arbeitsgerätes oder mit einer rotierenden hydraulischen zweiten Maschine (6) mechanisch oder elektrisch gekoppelt ist, wobei die zweite Maschine (6) von dem Primärvolumenstrom (21), die erste Maschine von einem Sekundärvolumenstrom (22) und der Konstantmotor (4) von einem Summenvolumenstrom (23) aus Primärvolumenstrom (21) und Sekundärvolumenstrom (22) gespeist ist.

2. Arbeitsgerät nach Anspruch 1, **dadurch gekennzeichnet, dass** wenigstens eine erste Maschine (5) mit mehreren zweiten Maschinen (6) gekoppelt ist.

3. Arbeitsgerät nach Anspruch 1 oder 2, **dadurch gekennzeichnet, dass** die Kopplung (51, 61) zwischen der ersten Maschine (5) und dem Konstantmotor (4) bzw. zwischen der ersten Maschine (5) und einer zweiten Maschine (6) mechanisch oder elektrisch ausgebildet ist.

4. Arbeitsgerät nach einem der Ansprüche 1 bis 3, **dadurch gekennzeichnet, dass** wenigstens eine der rotierenden hydraulischen Maschinen eine Axialkolbenmaschine ist.

5. Arbeitsgerät nach einem der vorgenannten Ansprüche, **dadurch gekennzeichnet, dass** wenigstens eine gekoppelte hydraulische Maschine ein verstellbares Schluckvolumen aufweist.

6. Arbeitsgerät nach Anspruch 5, **dadurch gekennzeichnet, dass** das verstellbare Schluckvolumen der wenigstens einen gekoppelten hydraulischen Maschine soweit verstellbar ist, dass bei gleicher Drehrichtung die Förderrichtung der Maschine umkehrbar ist.

7. Arbeitsgerät nach einem der vorgenannten Ansprüche, **dadurch gekennzeichnet, dass** mehrere Koppelgruppen, gebildet aus jeweils zwei miteinander gekoppelten Maschinen, angeordnet sind.

8. Arbeitsgerät nach einem der vorgenannten Ansprüche, **dadurch gekennzeichnet, dass** wenigstens ein Konstantmotor (4) ein Hydraulikzylinder ist.

9. Baumaschine, umfassend ein Arbeitsgerät nach einem der Ansprüche 1 bis 7.

10. Baumaschine nach Anspruch 9, **dadurch gekennzeichnet, dass** die Baumaschine ein Bohr- oder Rammgerät ist.

## Claims

1. Working machine for a construction machine comprising at least one hydraulic fixed displacement motor (4), which is arranged in a hydraulic circuit (2), which is fed by a primary volume flow (21) of a base pump (3) and is drivable via same, **characterised in that** at least one rotating hydraulic first machine (5) is arranged, which is hydraulically connected in parallel to the at least one fixed displacement motor (4), whereby a secondary volume flow (22) is branched off from the hydraulic circuit (2) behind the fixed displacement motor (4) and is fed to the primary volume flow (21) upstream of the fixed displacement motor (4), which first machine (5) is mechanically or electrically coupled to either the fixed displacement motor (4) of the working machine or to a rotating hydraulic second machine (6), wherein the second machine (6) is fed by the primary volume flow (21), the first machine by a secondary volume flow (22) and the fixed displacement motor (4) by a total volume flow (23) of primary volume flow (21) and secondary volume flow (22).

2. Working machine according to claim 1, **characterised in that** at least one first machine (5) is coupled to several second machines (6).

3. Working machine according to claim 1 or 2, **characterised in that** the coupling (51, 61) between the first machine (5) and the fixed displacement motor (4) or between the first machine (5) and a second machine (6) is mechanical or electrical.

4. Working machine according to any of claims 1 to 3, **characterised in that** at least one of the rotating hydraulic machines is an axial piston machine.

5. Working machine according to any of the previous claims, **characterised in that** at least one coupled hydraulic machine has an adjustable displacement volume.

6. Working machine according to claim 5, **characterised in that** the adjustable displacement volume of the at least one coupled hydraulic machine is adjustable to the extent that with the same direction of rotation the conveying direction of the machine is reversible.

7. Working machine according to any of the previous claims, **characterised in that** several coupling groups, formed by in each case two machines coupled together, are arranged.

8. Working machine according to any of the previous claims, **characterised in that** at least one fixed displacement motor (4) is a hydraulic cylinder.

9. Construction machine comprising a working machine according to any of claims 1 to 7.

10. Construction machine according to claim 9, **characterised in that** the construction machine is a drilling or pile-driving device.

## Revendications

1. Appareil de travail pour un engin de chantier, comprenant au moins un moteur hydraulique constant (4) disposé dans un circuit hydraulique (2) alimenté par le flux volumique primaire (21) d'une pompe de base (3), et entraînable via ledit circuit, **caractérisé en ce qu'**est disposée au moins une première machine (5) hydraulique rotative montée hydrauliquement en parallèle avec au moins un moteur constant (4), faisant qu'un flux volumique secondaire (22) est dévié du circuit hydraulique (2) en aval du moteur constant (4) et est apporté au flux volumique primaire (21) en amont du moteur constant (4), laquelle première machine (5) est couplée mécaniquement ou électriquement soit avec le moteur constant (4) de l'appareil de travail, soit avec une seconde machine (6) hydraulique rotative, sachant que la seconde machine (6) est alimentée par le flux volumique primaire (21), que la première machine est alimentée par le flux volumique secondaire (22) et que le moteur constant (4) est alimenté par un flux volumique total (23) composé du flux volumique primaire (21) et du flux volumique secondaire (22).

2. Appareil de travail selon la revendication 1, **caractérisé en ce qu'**au moins une première machine (5) est couplée avec plusieurs secondes machines (6).

3. Appareil de travail selon la revendication 1 ou 2, **caractérisé en ce que** l'accouplement (51, 61) entre la première machine (5) et le moteur constant (4) et/ou entre la première machine (5) et une seconde machine (6) est configuré mécanique ou électrique.

4. Appareil de travail selon l'une des revendications 1 à 3, **caractérisé en ce qu'**au moins l'une des machines hydrauliques rotatives est une machine à pistons axiaux.

5. Appareil de travail selon l'une des revendications précédentes, **caractérisé en ce qu'**au moins une machine hydraulique couplée présente un volume d'avalement ajustable.

6. Appareil de travail selon la revendication 5, **caractérisé en ce que** le volume d'avalement ajustable d'au moins une machine hydraulique couplée est ajustable de telle manière que dans le même sens de rotation le sens de refoulement de la machine est inversible.

7. Appareil de travail selon l'une des revendications précédentes, **caractérisé en ce que** sont disposés plusieurs groupes couplés, formés respectivement de deux machines couplées ensemble.

8. Appareil de travail selon l'une des revendications précédentes, **caractérisé en ce qu'** au moins un moteur constant (4) est un vérin hydraulique.

9. Engin de chantier comprenant un appareil de travail selon l'une des revendications 1 à 7.

10. Engin de chantier selon la revendication 9, **caractérisé en ce que** l'engin de chantier est un appareil de forage ou un appareil de battage.
